# FASCICULE DE BREVET EUROPEEN

(11) **EP 1 846 218 B1**
(45) Date de publication et mention de la délivrance du brevet: **25.06.2008**
(21) Numéro de dépôt: 06709268.4
(22) Date de dépôt: 07.02.2006
(51) Int. Cl.: B29C 49/42, B65G 47/84

(54) **DISPOSITIF ROTATIF DE TRANSFERT DE RECIPIENTS**
DREHVORRICHTUNG ZUM TRANSFERIEREN VON BEHÄLTERN
ROTARY DEVICE FOR TRANSFERRING CONTAINERS

(30) Priorité: 08.02.2005 FR 0501265
(43) Date de publication de la demande: 24.10.2007
(73) Titulaire: Sidel Participations, 76930 Octeville Sur Mer (FR)
(72) Inventeur: LEGALLAIS, Stéphane c/o Sidel, 76930 Octeville-sur-Mer (FR)
(74) Mandataire: Cabinet Plasseraud
(86) Numéro de dépôt international: PCT/FR2006/000280
(87) Numéro de publication internationale: WO 2006/084990

(56) Documents cités:
- FR-A- 2 479 077
- US-A- 2 609 946
- US-A- 3 659 694

## Description

La présente invention concerne des perfectionnements apportés aux dispositifs rotatifs de transfert de récipients, comportant une embase rotative qui tourne de façon continue autour d'un axe de rotation et qui supporte au moins un équipage mobile comprenant
**·** un bras principal monté de façon pivotante sur ladite embase par l'intermédiaire d'un axe de pivotement,
**·** une pince de préhension montée à l'extrémité libre dudit bras principal, et
**·** au moins un galet suiveur librement rotatif solidaire dudit bras principal et propre à coopérer avec une came curviligne fixe s'étendant selon un contour fermé.

Dans ce qui suit, le terme "récipient" peut s'appliquer, selon l'emplacement du dispositif de convoyage au sein de l'installation, à une ébauche de récipient, telle qu'une préforme ou un récipient intermédiaire, avant son introduction dans un moule ou à un récipient (final ou intermédiaire) après sa mise en forme dans un moule.

Les dispositifs visés par l'invention trouvent application dans les installations de fabrication de récipients tels que des bouteilles par des processus de soufflage ou d'étirage-soufflage de préformes chaudes en résine thermoplastique telle que du PET ou du PEN, les dispositifs de convoyage à bras de transfert (ou étoile de transfert) étant notamment utilisés à l'entrée des moules pour introduire les préformes chaudes dans les moules et à la sortie des moules pour récupérer les récipients venant d'être formés. Ces opérations d'introduction des préformes dans les moules et de récupération des récipients formés s'effectuent de façon continue, les deux dispositifs à bras de transfert d'entrée et de sortie tournant de façon continue en synchronisme avec un carrousel rotatif supportant les moules, lequel carrousel suit le parcours circulaire prédéterminé à convexité inversée par rapport à la trajectoire de l'embase rotative.

L'agencement des bras de transfert doit être tel que :
- la pince de préhension prévue à l'extrémité de chaque bras accompagne le col du récipient (c'est-à-dire la préforme ou l'ébauche à l'entrée du carrousel ou un récipient à proprement parler, final ou intermédiaire, à la sortie du carrousel) sur un secteur angulaire donné de part et d'autre du point de tangence des trajectoires circulaires respectives de la pince et de l'axe central des moules portés par le carrousel, alors même que ces trajectoires se développent respectivement avec des concavités tournées à l'opposé l'une de l'autre, le secteur devant avoir un développement suffisant pour permettre la saisie ou le relâchement du récipient dans le moule;
- il ne doit se produire aucune interférence entre les moules et les récipients transportés par les bras, lorsque ces derniers sont en phase de transfert d'un récipient.

Le document FR 2 479 077 montre et décrit un agencement d'un dispositif de convoyage à bras de transfert (figures 6-12 ; page 7 ligne 16 à page 8 ligne 15, et page 10 ligne 20 à page 11 ligne 26). En se reportant aux figures 1 à 3 des dessins annexés (correspondant respectivement aux figures 8, 10 et 11 du document FR 2 479 077), le dispositif de convoyage connu comprend un plateau 1 rotatif qui porte une pluralité de bras 2 de transfert régulièrement répartis sur sa périphérie. Ces bras 2 de transfert sont montés pivotant sur le plateau 1 par l'intermédiaire d'axes 3 de pivotement respectifs. Pour commander le pivotement de chaque bras 2 de transfert de part et d'autre de sa position radiale, chaque bras 2 est solidaire d'un levier 4 portant un galet 5 coopérant, en la suivant, avec une came 6 fixe ayant une forme curviligne fermée sur elle-même.

De plus chaque bras 2 de transfert est agencé sous forme télescopique. A cette fin, chaque bras 2 comprend un étrier 7 qui est solidaire de l'axe 3 de pivotement sur le plateau 1. Dans l'étrier 7 est monté à libre coulissement une tige 8 rappelée en élongation minimale par un ressort 9 interposé entre ladite tige 8 et l'étrier 7. La tige 8 est solidaire d'un galet 10 coopérant, en la suivant, avec une came fixe s'étendant selon un contour curviligne fermé, le galet 10 en appui sur la came commandant la variation de la longueur du bras 2 de transfert en fonction du contour de la came au cours de la rotation du plateau 1.

A son extrémité libre, la tige 8 supporte une pince 11 de préhension de récipients, à deux mâchoires 12, 13 pivotantes, rappelées l'une vers l'autre par un ressort 14. Dans le mode de réalisation illustré, il est prévu un mécanisme d'ouverture des mâchoires 12, 13 pour agir à l'encontre du ressort 14 afin de permettre une saisie ou un relâchement aisé des récipients. Ce mécanisme comprend une biellette 15 articulée sur la pince 11 et également articulée à un levier 16 monté pivotant autour d'un axe 17 sur l'étrier 7. L'autre extrémité du levier 16 supporte un galet 18 coopérant avec un chemin de came fixe définissant une trajectoire 19 curviligne.

Dans d'autres dispositifs connus, le mécanisme d'ouverture des mâchoires n'est pas prévu, la saisie ou le relâchement des récipients par les mâchoires s'effectuant alors à force.

Un autre dispositif est connu du document US-A-3 659 694. Sur la figure 3, la trajectoire suivie par l'axe 3 de pivotement est désignée par 20.

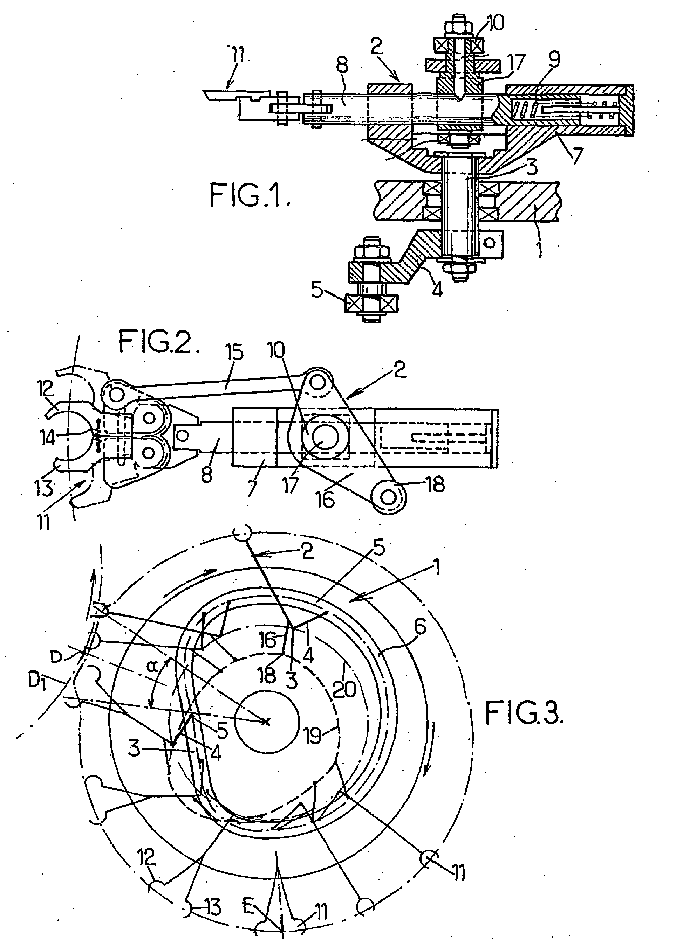

Grâce à cet agencement structurel et grâce à des formes appropriées données aux diverses cames, le dispositif connu peut fonctionner de la manière suivante qui est illustrée schématiquement à la figure 3 des dessins annexés (la droite joignant le centre de rotation du dispositif et du carrousel et passant par le point D de tangence des deux trajectoires circulaires étant considérée comme axe de référence). Sur cette figure 3, on a représenté très schématiquement un seul bras 2 de transfert dans ses diverses positions sur un tour de rotation du plateau 1.

Approximativement au début du quart de la trajectoire circulaire en aval du point de tangence D (considéré dans le sens de rotation du dispositif de convoyage), le bras 2 de transfert est amené à pivoter, sous la commande du galet 5 engagé dans la came 6, pour venir en avance sur sa position radiale, c'est-à-dire que l'extrémité libre du bras 2 supportant la pince 11 précède l'axe 3 de pivotement du bras 2 sur le plateau 1. Simultanément, sous la commande du galet 10 engagé avec les cames correspondantes, la tige 8 est amenée en extension par rapport à l'étrier 7 de sorte que le bras 2 de transfert présente sa longueur maximale. Ainsi, la pince 11 est amenée, en un point D1 situé en amont du point D, sensiblement en coïncidence avec la trajectoire de l'axe du moule en amont du point de tangence D.

Ensuite, grâce aux formes respectives appropriées des cames guidant les galets 5 et 10 respectivement, le bras 2 de transfert est progressivement ramené vers sa position radiale qu'il atteint lorsque son axe 3 de pivotement sur le plateau 1 coïncide avec l'axe de référence défini plus haut, en même temps que la tige 8 est progressivement rentrée dans l'étrier 7 et que la longueur du bras 2 décroît jusqu'à devenir minimale lorsque l'axe 3 de pivotement du bras parvient en coïncidence avec l'axe de référence.

Au-delà de l'axe de référence, de façon inversée, le bras 2 de transfert est amené à pivoter vers l'amont (dans le sens de rotation) en s'écartant progressivement de sa position radiale, en même temps que sa longueur est amenée à croître par extension progressive de la tige 8 hors de l'étrier 7.

Grâce à un tel agencement, on fait en sorte que la pince 11 reste en coïncidence avec l'axe du moule et accompagne celui-ci sur un secteur angulaire α prédéterminé suffisant pour qu'une préforme puisse être introduite dans le moule (à l'entrée) ou qu'un récipient puisse être sorti du moule (à la sortie) sans interférence avec les parties mobiles du moule et tout en laissant à ces parties mobiles du moule le temps nécessaire à leur déplacement (temps de fermeture du moule à l'entrée, temps d'ouverture à la sortie).

Des variantes de réalisation de cette structure de base ont été réalisées pour des applications spécifiques; notamment le document FR 2 802 191 concerne une variante à double pince de préhension, propre à coopérer avec un moule à double cavité traitant simultanément deux récipients, dans laquelle le bloc à deux pinces est monté pivotant à l'extrémité du bras de transfert. D'autres adaptations sont indiquées dans les documents FR 2 709 264, FR 2 731 176 et FR 2 796 588.

Ces agencements connus donnent certes toute satisfaction et équipent de façon courante les installations de fabrication de récipients indiquées plus haut.

Toutefois ces agencements sont structurellement complexes, avec notamment des organes coulissants, entrant dans la constitution du bras télescopique, qui génèrent des frottements et donc des usures; il en résulte progressivement des jeux générateurs de vibrations et de bruits. En outre les multiples déplacements d'organes mobiles nécessitent la mise en place de cames respectives, qui sont onéreuses à fabriquer et qui sont encombrantes de par leur nombre.

Surtout, le dispositif de convoyage agencé comme il a été exposé plus haut présente une dimension transversale importante, et l'encombrement général du dispositif de convoyage est d'autant plus gênant que celui de ces dispositifs qui se trouve à l'entrée du dispositif de moulage est en saillie par rapport au bloc formé par l'ensemble de l'installation.

Enfin, la multiplicité des organes et la multiplicité des mouvements ne permettent pas d'envisager de faire fonctionner le dispositif de convoyage connu à des vitesses plus élevées que celles pratiquées actuellement, alors qu'il y a aujourd'hui, de la part des exploitants d'installations de fabrication de récipients, une demande pressante pour des cadences de production plus élevées.

L'invention a donc pour but de répondre aux diverses exigences de la pratique et de proposer un dispositif de convoyage perfectionné qui, tout en restant propre à assurer la fonction de délivrance de préformes ou de saisie de récipients achevés avec accompagnement du moule sur un secteur angulaire donné, soit de structure simplifiée avec moins d'organes composants, moins d'organes en mouvement (réduction du nombre de cames), qui soit plus compact de manière à autoriser la réalisation d'installations globalement plus ramassées, et qui soit adapté à supporter des vitesses de fonctionnement plus élevées.

A ces fins, un dispositif rotatif de convoyage de récipients tel que mentionné au préambule se caractérise, étant agencé conformément à l'invention,
en ce que l'axe de pivotement et l'extrémité libre du bras principal définissent une ligne qui s'étend approximativement tangentiellement à la trajectoire circulaire dudit axe de pivotement, l'axe de pivotement précédant l'extrémité libre du bras dans le sens de rotation de l'embase,
en ce que la came curviligne est configurée de manière telle que, lors de la rotation de l'embase, l'extrémité dudit bras principal entraîné par le galet suiveur soit déplacée approximativement radialement, et
en ce que la pince de préhension montée sur ladite extrémité libre du bras principal suit, sur une plage angulaire fixée de la rotation de l'embase, un parcours circulaire prédéterminé à convexité inversée par rapport à la trajectoire de l'embase rotative.

Grâce à l'agencement proposé conformément à l'invention, le bras de transfert possède une structure simple, sans organes coulissants, dont tous les déplacements sont purement rotatifs. Au surplus, la capacité de déplacement du bras rotatif est réduite à un seul pivotement autour de son axe de montage sur le plateau, ce qui nécessite pour la commande de ce mouvement de pivotement un.seul galet suiveur engagé dans une came unique à deux pistes de guidage en vis-à-vis ou, pour éviter les phénomènes de rebond du galet, à deux galets superposés coopérant avec une came à deux pistes de guidage en regard et décalées verticalement.

Certes, avec un bras de transfert ainsi agencé, la pince de préhension n'est plus en mesure d'accompagner l'axe du moulage de façon parfaitement coaxiale sur l'angle de rotation α prédéterminé mentionné plus haut en regard de l'agencement antérieur. Toutefois, il faut être conscient que l'écart radial, décroissant en amont du point de tangence D et croissant en aval dudit point, entre l'axe du moule et la pince est, en pratique très faible, typiquement de quelques centièmes de millimètre, voire d'un petit nombre de dixièmes de millimètre : il est donc parfaitement possible de déterminer un déplacement du bras de transfert approprié à ce que la pince accompagne au plus près l'axe du moule tout en faisant en sorte qu'il n'y ait aucun contact entre le récipient soutenu par la pince et la paroi du moule. Autrement dit, il est possible de faire en sorte, non plus que la pince accompagne strictement l'axe du moule coaxialement au déplacement rotatif de celui-ci (ce qui assure de façon certaine l'absence de tout contact entre le récipient et la paroi du moule), mais que la pince suive une trajectoire telle que le récipient accompagne le mouvement de fermeture ou d'ouverture du demi-moule avec maintien d'un intervalle minimum de sécurité entre ce demi-moule et le récipient de manière qu'il n'y ait pas de contact entre eux.

On comprendra aisément que la simplification structurelle du bras de transfert et de ses commandes conduit à un dispositif de convoyage moins onéreux et qui, surtout, est capable de fonctionner à des vitesses sensiblement plus élevées que celles des dispositifs actuels, ce qui autorise, en combinaison avec des perfectionnements apportés par ailleurs à d'autres dispositifs conjoints, que l'ensemble de l'installation de fabrication de récipients puisse fonctionner à des cadences sensiblement supérieures.

Pour tenter de réduire, dans une certaine mesure, la dimension transversale du dispositif de convoyage lors du déplacement approximativement radial de la pince de préhension, on prévoit, dans un mode de réalisation préféré,
que le bras principal du bras de transfert soit conformé approximativement en L, avec une première branche montée, par une de ses extrémités, sur ladite embase rotative par l'intermédiaire dudit axe de pivotement et avec une seconde branche s'étendant approximativement transversalement à ladite première branche et
que ladite première branche supporte, à son extrémité libre, ladite pince de préhension qui s'étend sensiblement transversalement à ladite seconde branché.

Dans ce dernier cas, un mode de réalisation possible consiste en ce que le galet suiveur soit solidaire de la seconde branche du bras principal. Il est alors intéressant que le galet suiveur soit supporté par un bras de levier qui s'étende approximativement transversalement à la seconde branche du bras principal, à l'opposé de la première branche. Notamment, on peut faire en sorte que la première branche et la pince de préhension s'étendent du même côté de la seconde branche et que le bras de levier s'étende du côté opposé. Un tel agencement réduit l'emprise de l'embase en permettant un déport du bras.

De façon pratique, dans un exemple concret de réalisation, on prévoit que la première branche et la seconde branche du bras principal forment entre elles un angle supérieur à 90° et compris entre 100° et 110°.

Toujours dans un exemple concret de réalisation, on prévoit que la pince soit orientée, par rapport à ladite seconde branche du bras principal, sous un angle supérieur à 90° et compris entre 95° et 110°.

De préférence, l'embase rotative comprend un plateau et au moins un bras de support solidaire dudit plateau et s'étendant sensiblement radialement à celui-ci et l'extrémité de ce bras de support supporte l'axe de pivotement du bras de transfert.

D'une façon simple, en soi connue, la pince est du type à rappel automatique par ressort en position fermée.

Pour que le bras soit guidé de façon correcte sans phénomène de rebond générateur de vibrations et de bruit, il est souhaitable que le dispositif comporte deux galets fous superposés propres à coopérer respectivement avec deux cames respectivement intérieure et extérieure décalées verticalement l'une par rapport à l'autre.

L'invention sera mieux comprise à la lecture de la description détaillée qui suit de certains modes de réalisation préférés, donnés uniquement à titre purement illustratif. Dans cette description, on se réfère aux dessins annexés sur lesquels:
- les figures 1 et 2 sont des vues, respectivement de côté en coupe et de dessus, d'un bras de transfert de l'état de la technique (respectivement figures 8 et 10 du document FR 2 479 077) ;
- la figure 3 est une vue très schématique de dessus illustrant la fonction d'un dispositif de convoyage de récipient de l'état de la technique (figure 11 du document FR 2 479 077) équipé de bras de transfert agencés selon les figures 1 et 2 ;
- la figure 4A est une vue très schématique de dessus montrant un dispositif de convoyage de récipient agencé conformément à l'invention, un seul bras de transfert étant illustré par souci de simplification et de clarté du dessin ;
- la figure 4B est une vue très schématique de dessus montrant une variante de réalisation préférée du dispositif de convoyage de la figure 4A ;
- la figure 5 est une vue en perspective de côté, sous un angle très incliné, d'un exemple de réalisation concret d'un bras de transfert pour le dispositif de convoyage de la figure 4 ;
- les figures 6 à 8 sont des vues en plan illustrant le fonctionnement du dispositif de convoyage de l'invention à plusieurs instants du processus de saisie d'un récipient dans un moule ; et
- la figure 9 est une vue en plan illustrant le fonctionnement du dispositif de convoyage de l'invention à deux instants du processus de délivrance d'un récipient dans un moule.

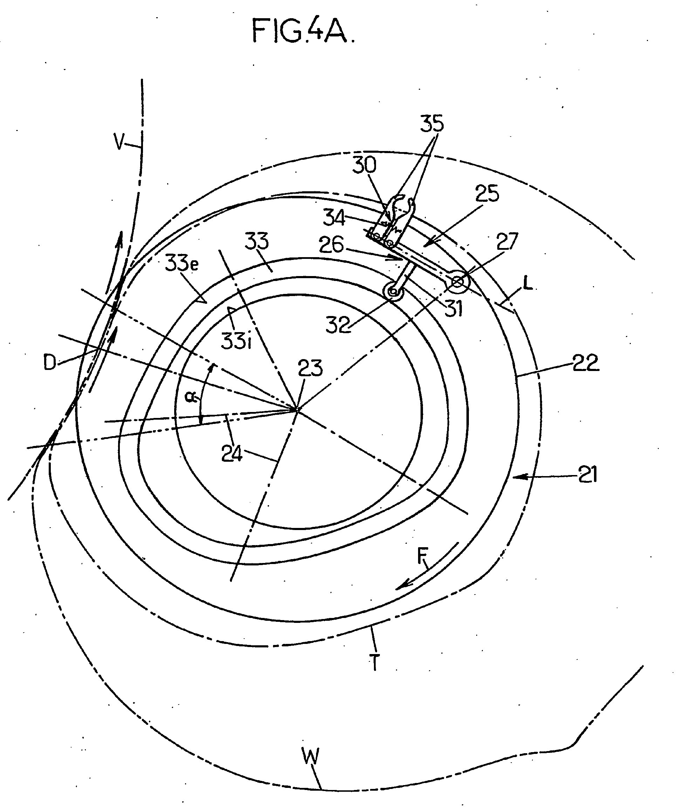

En se reportant tout d'abord à la figure 4A, le dispositif de convoyage conforme à l'invention comporte une embase 21 rotative (correspondant au plateau 1 rotatif du dispositif antérieur) qui peut avantageusement comprendre un plateau 22 rotatif tournant autour d'un axe 23 vertical.

Le plateau 22 supporte au moins un (et en pratique une pluralité) équipage 25 mobile qui est agencé de la façon suivante. Un bras 26 principal est supporté de façon pivotante sur le plateau 22 par l'intermédiaire d'un axe 27 vertical, le bras 26 principal étant apte à pivoter dans un plan horizontal, sensiblement parallèlement au plan du plateau 22. Une pince 30 de préhension est montée à l'extrémité libre du bras 26 principal et cette pince 30 de préhension s'étend approximativement transversalement au bras 26. Enfin au moins un galet 32 suiveur librement rotatif est solidaire du bras 26 principal et coopère avec une came 33 fixe, de forme curviligne fermée sur elle-même autour de l'axe 23. Le galet 32 peut être monté à l'extrémité d'un bras 31 de levier transversal au bras 26 principal et solidaire de celui-ci.

Conformément à l'invention, on prévoit que l'axe 27 de pivotement et l'extrémité libre du bras 26 principal définissent une ligne L qui s'étende approximativement tangentiellement à la trajectoire circulaire dudit axe 27 de pivotement, l'axe 27 de pivotement précédant l'extrémité libre du bras 26, et donc la pince 30 de préhension, dans le sens de rotation (flèche F) de l'embase 21.

En outre, on prévoit que la came 33 curviligne soit configurée de manière telle que, lors de la rotation de l'embase 21, l'extrémité libre, équipé de la pince 30 de préhension, dudit bras 26 principal entraîné par le galet 32 suiveur soit déplacée approximativement radialement.

Enfin, on prévoit encore que la pince 30 de préhension montée sur ladite extrémité libre du bras 26 principal suit, sur une plage angulaire α fixée de la rotation de l'embase 21, un parcours circulaire prédéterminé à convexité inversée par rapport à la trajectoire de l'embase 21 rotative, autrement dit à concavité tournée vers l'extérieur comme visible sur la figure 4A.

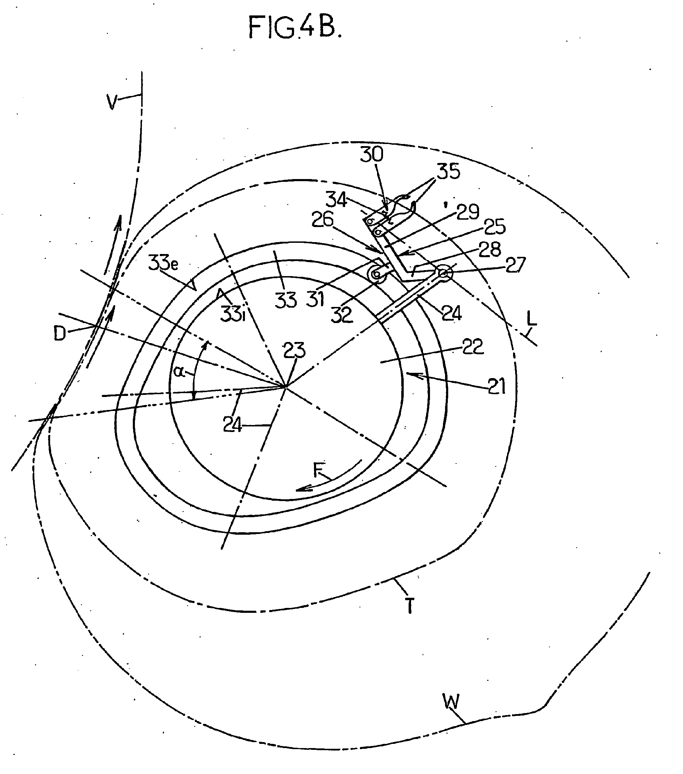

On se reporte maintenant à la figure 4B pour exposer une variante de réalisation préférée du dispositif de convoyage qui vient d'être présenté. Dans cette variante, l'embase 21 rotative comprend un plateau 22 rotatif, tournant autour de l'axe 23 vertical, qui est de diamètre notablement réduit et qui est muni d'une pluralité de bras 24 radiaux fixes (par exemple cinq bras 24 décalés angulairement de 60° dans l'exemple illustré). Pour fixer les idées, les bras 24 ont une longueur approximativement égale au rayon du plateau 22. Un tel agencement permet, d'une part, d'alléger sensiblement la partie rotative par rapport au dispositif de l'art antérieur ou au dispositif précédent et, d'autre part, de dégager de l'espace libre entre deux équipages mobiles consécutifs de manière que chaque équipage mobile qui va être décrit ci-après puisse fonctionner sans avoir à être déporté radialement trop loin de l'axe 23 vertical de rotation.

Chaque bras 24 radial supporte un équipage 25 mobile qui est agencé de la façon suivante. Comme précédemment, le bras 26 principal est supporté de façon pivotante à l'extrémité du bras 24 radial par l'intermédiaire de l'axe 27 vertical. Ici, le bras 26 principal est conformé approximativement en L, avec une première branche 28 montée, par une de ses extrémités, sur l'extrémité du bras 24 radial de l'embase 21 rotative par l'intermédiaire de l'axe 27 et avec une seconde branche 29 s'étendant approximativement transversalement à ladite première branche 28. En outre la pince 30 de préhension est montée à l'extrémité libre de la seconde branche 29 du bras 26 principal et cette pince 30 de préhension s'étend approximativement transversalement à la seconde branche 29.

Enfin le bras 31 de levier est solidaire, par une de ses extrémités, de préférence de la seconde branche 29 du bras 26 principal et supporte à son autre extrémité au moins un galet 32 suiveur.

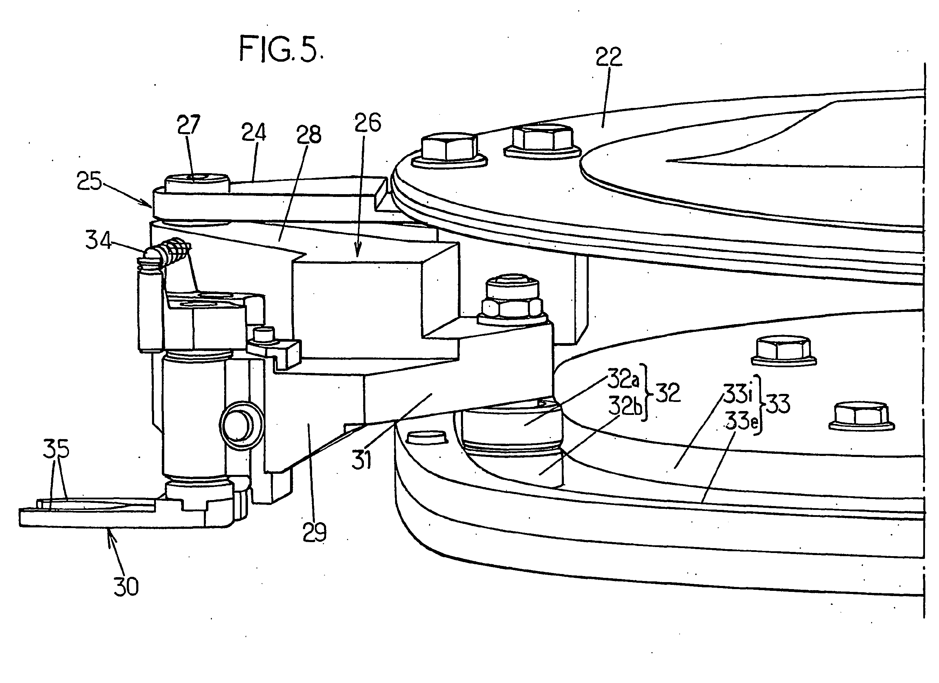

Comme illustré à la figure 5, il est avantageusement prévu, pour éviter un phénomène de rebond dans le cas où le galet 32 serait unique, deux galets 32a, 32b superposés coopérant respectivement avec deux cames 33i, 33e en vis-à-vis et décalées verticalement, l'une 33i étant intérieure et l'autre 33e étant extérieure, pour réaliser un couloir de guidage.

Pour réduire autant que possible la dimension radiale de l'ensemble tournant, le bras 26 principal en forme approximative de L est fixé au bras 24 radial de manière que la première branche 28 dudit bras 26 principal s'étende approximativement vers l'intérieur, en direction du plateau 22, à partir de l'axe 27 de pivotement, de sorte que l'équipage 25 mobile se trouve globalement logé le long du bras 24 radial et ne s'étende pas sensiblement, radialement, au-delà de l'extrémité du bras 24 radial. Ainsi, dans ce contexte la ligne L précitée ne coïncide plus avec le bras 26 principal, lequel se situe en retrait radialement vers l'intérieur par rapport à cette ligne.

De plus, on notera que la pince 30 de préhension est montée sur la seconde branche 29 de manière à s'étendre transversalement à celle-ci du même côté que la première branche 28, l'ensemble ayant approximativement une forme de U. Pour faciliter le montage et les mouvements, les première et seconde branches 28, 29 du bras principal ne sont pas perpendiculaires l'une à l'autre, mais forment entre elles un angle supérieur à 90°, de préférence compris entre 100° et 110°. De même, la pince 30 de préhension forme avec la seconde branche 29 un angle supérieur à 90°, et de préférence compris entre 95° et 110°.

Le bras 31 de levier, quant à lui, est monté sur la seconde branche 29 à l'opposé de la première branche 28 et de la pince 30 de préhension, de telle sorte que la came 33 possède, par rapport à l'axe 23 de rotation, un rayon (variable) de relativement faible extension.

On soulignera que la pince 30 de préhension peut être agencée de toute manière appropriée à sa fonction.

Avantageusement, comme illustré aux figures 4A, 4B et 5, pour éviter des commandes complexes d'ouverture et/ou de fermeture par came et galet, on a recours au type de pince illustré à la figure 2. Cette pince s'ouvre au contact du col du récipient sous l'action de la poussée, respectivement de la traction exercée par le bras 26 principal entraîné par le galet 32 déplacé dans la came 33, tandis qu'en l'absence d'effort antagoniste un ressort 34 de rappel ramène les mâchoires 35 en position de fermeture.

Grâce aux moyens qui viennent d'être exposés, il est possible de commander toute position radiale souhaitée de la pince 30 de préhension à l'aide d'un guidage approprié du galet 32, en donnant à la came 33 la forme requise par rapport à l'axe 23 de rotation.

Aux figures 4A et 4B, la trajectoire suivie par la pince 30 de préhension, en relation avec la combinaison du mouvement de rotation de l'axe 27 de pivotement autour de l'axe 23 de rotation et du mouvement combiné de rotation et de déplacement radial du galet 32 dans la came 33 est dessinée en T. On constate que, dans un secteur angulaire α, la trajectoire T épouse la trajectoire curviligne convexe V suivie par l'axe des dispositifs (par exemple des moules) avec lesquels sont échangés (pris ou délivrés) les récipients.

En considérant les figures 4A et 4B, on constate qu'avec une structure beaucoup plus simple que celle du dispositif antérieur, non seulement il est possible de donner à la pince 30 une trajectoire T accompagnant la trajectoire V sur un secteur angulaire souhaité, mais encore que la trajectoire T de la pince 30 possède une extension radiale autour de l'axe 23 qui est beaucoup plus petite que celle (illustrée en W à titre de comparaison) de la pince du dispositif antérieur. On constitue ainsi un dispositif de convoyage beaucoup moins encombrant que le dispositif antérieur, ce qui conduit plus généralement à une installation de fabrication de récipients occupant une moindre surface au sol.

On soulignera également que la structure particulière donnée ici à l'embase 21 rotative et la structure simplifiée donnée aux équipages 25 mobiles prévus aux extrémités des bras 24 radiaux respectifs conduisent à un allégement notable de l'ensemble rotatif, et donc à des inerties moindres. En outre, dans chaque équipage 25 mobile le seul mouvement est le mouvement de pivotement du bras 26 principal, en lieu et place de la combinaison complexe de mouvements de rotation et de translation dans le dispositif antérieur; cet unique mouvement de pivotement ne requiert qu'une came unique, en lieu et place des multiples cames du dispositif antérieur : il en résulte des frottements moindres et une moindre résistance à la rotation pour l'entraînement de l'embase 21 rotative et il en résulte un moindre encombrement de l'espace.

Finalement, il est possible de faire tourner ce dispositif plus léger et moins résistant à des vitesses sensiblement supérieures à celles praticables avec le dispositif antérieur, ce qui, en conjonction avec d'autres aménagements apportés dans d'autres dispositifs associés, permet d'envisager des cadences de production plus élevées pour l'installation complète. Au surplus, cet avantage notable s'accompagne d'une réduction sensible des coûts de fabrication du dispositif conforme à l'invention (réduction de matière première, réduction des coûts d'usinage des pièces composantes, réduction des coûts d'assemblage et de montage dus au nombre réduit des pièces composantes):

Il est utile de rappeler ici que le dispositif de convoyage à structure simplifiée est certes d'assurer la même fonction globale que le dispositif de convoyage de l'art antérieur, à savoir faire en sorte que la pince de préhension accompagne, sur un secteur angulaire prédéterminé, un dispositif effectuant une trajectoire circulaire convexe par rapport à la trajectoire suivie par la pince et auquel la pince délivre un récipient ou sur lequel la pince prélève un récipient. Mais, si la fonction recherchée est certes assurée dans sa globalité par le dispositif conforme à l'invention, dans le détail le fonctionnement du dispositif de l'invention diffère sensiblement de celui du dispositif antérieur en raison même de la mise en oeuvre d'une structure simplifiée.

En effet, comme cela a été précisé plus haut, le dispositif antérieur était agencé de manière telle que la pince accompagne le dispositif associé sur un secteur angulaire donné en restant strictement coaxiale à l'axe d'un support de récipient (par exemple l'axe d'un moule) prévu sur ledit dispositif associé. C'est le maintien de cette coaxialité sur toute l'étendue du secteur angulaire qui a conduit à la conception complexe exposée plus haut des bras de transfert, le but recherché et assuré en pratique étant d'empêcher toute interférence entre le récipient amené ou saisi par la pince et le dispositif associé (les parois du moule par exemple).

D'une façon différente, la structure simplifiée de l'équipage mobile 25 conforme à l'invention et décrit ci-dessus en référence aux figures 4A, 4B et 5 ne permet pas d'assurer une stricte coaxialité sur toute l'étendue du secteur angulaire : la stricte coaxialité n'est assurée que dans la partie centrale du secteur angulaire de coïncidence des trajectoires tandis que dans les zones de début et de fin de ce secteur angulaire l'axe de la pince est légèrement décalé par rapport à l'axe du logement du dispositif associé. Toutefois il faut préciser que l'écart reste très faible, de l'ordre de quelques dixièmes de millimètre, et qu'en pratique il n'en résulte aucun inconvénient. Dans le cas où le dispositif associé est un moule du type portefeuille, le récipient amené ou saisi par la pince du dispositif de convoyage agencé selon l'invention accompagne le déplacement d'un des demi-moules en cours de fermeture ou respectivement d'ouverture sans toutefois venir en contact avec lui.

C'est précisément l'acceptation, lors du fonctionnement, de ce désaxement de la pince par rapport au logement du dispositif associé dans des zones de la trajectoire où la coaxialité ne s'impose pas absolument que l'on a pu concevoir un bras de transfert à structure simplifiée propre à satisfaire les diverses exigences de moindre coût et de vitesse de fonctionnement plus élevée.

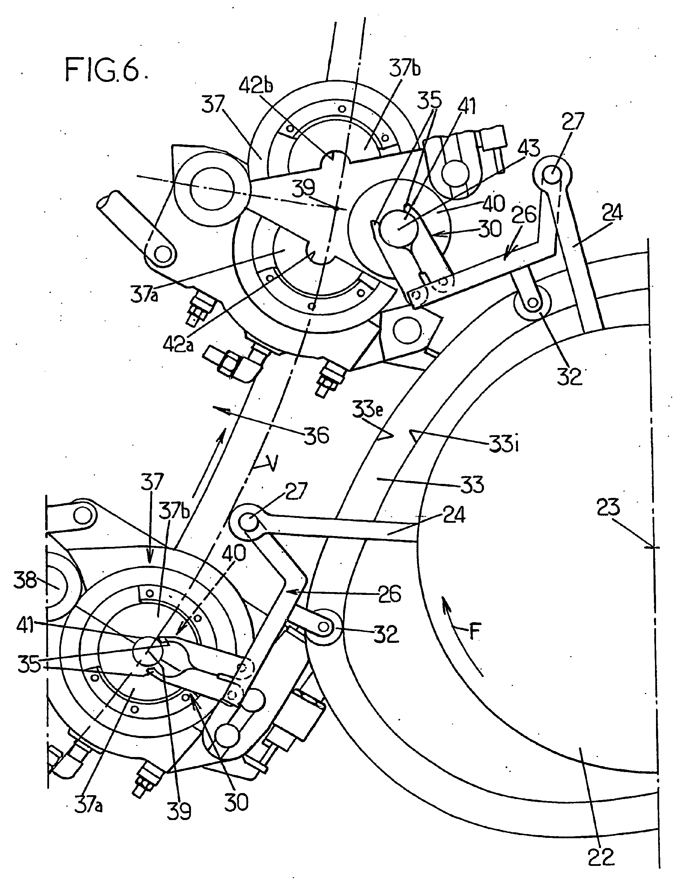

Pour fixer les idées-sur ce point, les figures 6 à 8 des dessins annexés illustrent, à plus grande échelle, le fonctionnement du dispositif de convoyage conforme à l'invention en association avec un carrousel 36 tournant supportant à sa périphérie une multiplicité de moules 37 de soufflage ou d'étirage-soufflage propres à la fabrication de récipients (en l'occurrence des bouteilles) en résine thermodéformable, notamment en PET.

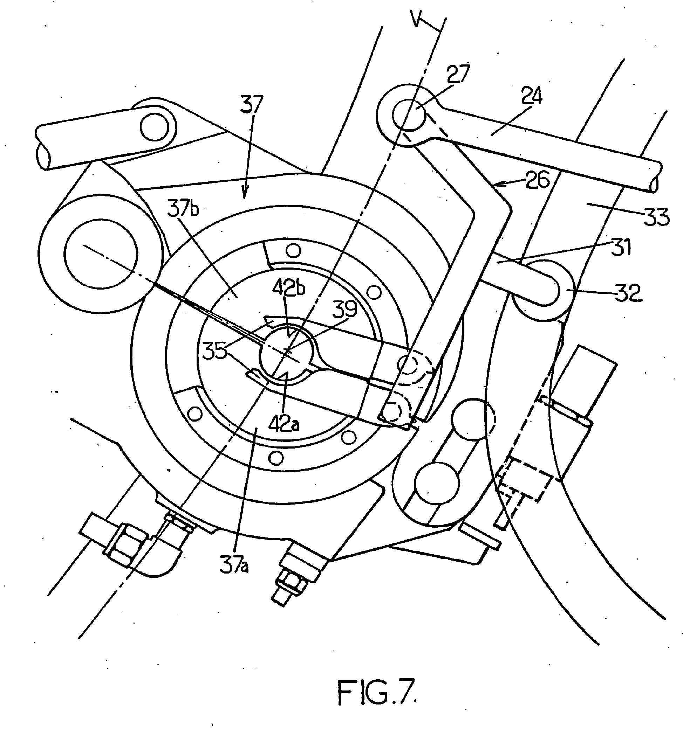

On se référera tout d'abord aux figures 6 et 7 qui illustrent trois étapes de la saisie, par la pince 30 de préhension, d'un récipient terminé dans un moule. Chaque moule 37 est supposé être du type portefeuille avec deux demi-moules 37a, 37b qui sont réunis par un axe 38 d'articulation. L'axe 39 du moule 37 suit une trajectoire circulaire matérialisée par la ligne circulaire V.

A la figure 6, le moule 37 situé en bas sur le dessin est en position de fermeture ; un récipient 40 vient d'y être moulé par soufflage ou étirage-soufflage et seul le col 41 de ce récipient, qui est en saillie hors du moule, est visible. Le récipient est, ici, coaxial au moule. Le dispositif de convoyage est dans une position telle que, sous l'action du bras 26 principal repoussé par le galet 32 guidé dans la came 33 de forme appropriée, la pince 30 est mue radialement vers l'extérieur (par rapport à l'axe 23) et est ici représentée alors qu'elle entre en contact avec le col 41 du récipient.

Le déplacement radial vers l'extérieur de la pince 30 se poursuivant, la pince 30 s'ouvre au contact du col 41, les mâchoires 35 passent de part et d'autre du col, puis se referment élastiquement sous l'action du ressort 34 en enserrant le col 41 du récipient 40.

A ce moment, le récipient 40 étant pris en charge par le dispositif de convoyage, le moule 37 commence à s'entrouvrir comme illustré à la figure 7 à échelle agrandie. (Sur la figure 7, le col 41 du récipient n'est pas représenté pour permettre de mieux voir les deux demi-évidements 42a, 42b centraux des demi-moules 37a, 37b qui entouraient le col 41 dans le moule 37 situé en bas de la figure 6, ainsi que les deux mâchoires 35 de la pince 30 entre lesquelles est maintenant saisi le col du récipient). Dans la position en tout début d'ouverture du moule 37 illustrée à la figure 7, l'axe des mâchoires 35 de la pince 30 - autrement dit l'axe du récipient - est encore en coïncidence avec l'axe 39 du moule et la pince 30 accompagne l'axe 39 du moule 37 dans sa course le long de la ligne V.

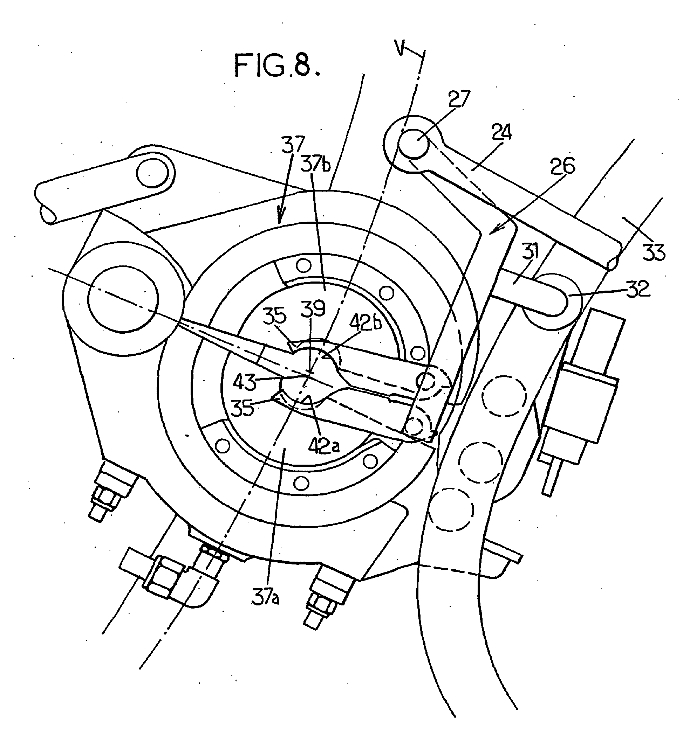

La figure 8 montre la situation ultérieure avec le moule 37 encore plus largement ouvert (mais non encore à pleine ouverture). L'axe 43 des mâchoires 35 de la pince 30 (et donc l'axe du récipient supporté par celle-ci) est toujours sur la trajectoire V suivi par l'axe 39 du moule 37, mais un très faible décalage commence à apparaître entre l'axe 43 des mâchoires 35 et l'axe 39 du moule, l'axe 43 étant légèrement retardé par rapport à l'axe 39.

Enfin, dans la situation illustrée en haut de la figure 6, le moule 37 est en position d'ouverture maximale tandis que le bras 26 principal s'est déjà écarté radialement de façon notable, le récipient 40 étant en cours de dégagement hors du moule. On notera que l'axe 43 des mâchoires 35 - et donc l'axe du récipient 40 - n'est plus aligné avec l'axe 39 du moule 37, mais est sensiblement en retard sur celui-ci, ce qui fait que le récipient 40 suit au plus près (mais sans la toucher) la paroi du demi-moule 37a.

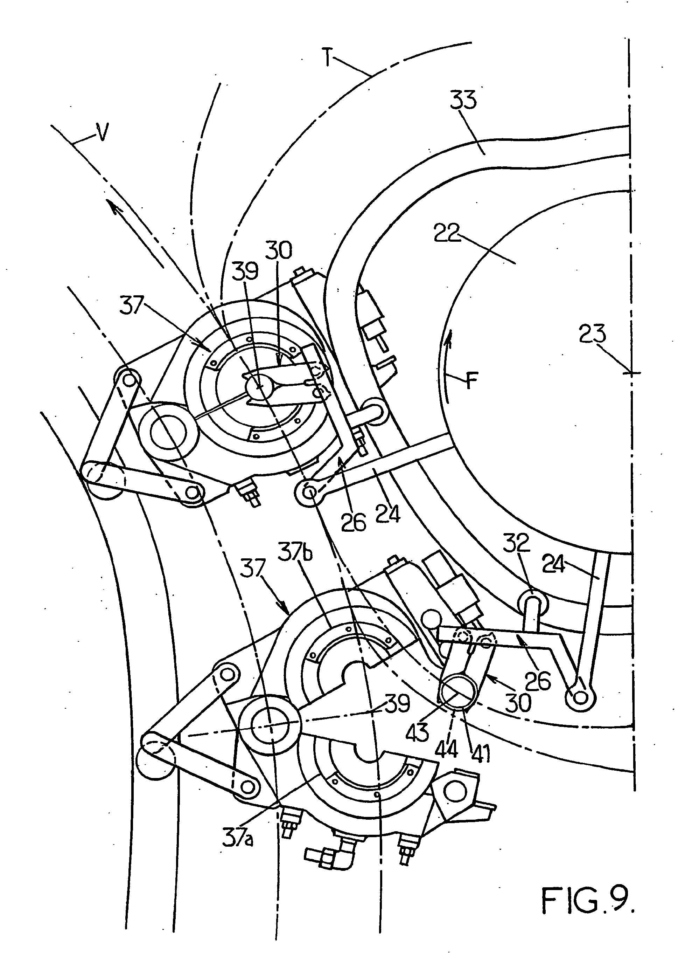

La figure 9 illustre deux étapes de l'amenée d'un récipient (ici une préforme par exemple) dans un moule 37. En bas de la figure 9, le moule 37 est ouvert au maximum, son axe 39 suivant la trajectoire circulaire V, tandis que la pince 30 supporte, par son col 41, une préforme 44 dont l'axe 43 suit la trajectoire T. En haut de la figure 9, les deux trajectoires T et V coïncident et la pince 30 et la préforme 44 sont situées coaxialement au moule 37 qui est refermé. Immédiatement en aval, les deux trajectoires T et V s'écartent l'une de l'autre : sous l'effort d'entraînement du bras 26 principal lui-même entraîné par le galet 32 guidé par la came 33, la pince 30 est tirée radialement vers l'extérieur et se dégage du col 41 de la préforme 44 qui est alors supportée par le moule 37.

On notera que, lorsque le bras 26 principal assume la fonction de saisie d'un récipient (figures 6 à 8), il faut parvenir à une coïncidence exacte de position des axes du récipient (autrement dit de l'axe 39 du moule) et de la pince (axe 43 des mâchoires) en un point précis des deux trajectoires T et V coïncidentes, point où la pince saisit le récipient, tandis qu'aucune précision de position relative n'est nécessaire ultérieurement. Inversement, lorsque le bras 26 principal assume la fonction de délivrance d'un récipient (figure 9), il faut parvenir à une coïncidence exacte de position des axes du récipient (autrement dit de l'axe des mâchoires de la pince 30) et du moule ouvert en un point précis des deux trajectoires T et V coïncidentes, point où la pince abandonne le récipient, tandis qu'aucune précision de position relative n'est nécessaire auparavant.

## Revendications

1. Dispositif rotatif de transfert de récipients, comportant une embase (21) rotative qui tourne de façon continue autour d'un axe (23) de rotation et qui supporte au moins un équipage mobile (25) comprenant
· un bras (26) principal monté de façon pivotante sur ladite embase (21) par l'intermédiaire d'un axe (27) de pivotement, l'axe (27) de pivotement et l'extrémité libre du bras (26) principal définissant une ligne (L) qui s'étend approximativement tangentiellement à la trajectoire circulaire dudit axe de pivotement, l'axe de pivotement précédant l'extrémité libre du bras dans le sens (F) de rotation de l'embase (21),
· une pince (30) de préhension montée à l'extrémité libre dudit bras (26) principal, et
· au moins un galet (32) librement rotatif solidaire dudit bras (26) principal et propre à coopérer, en la suivant, avec une came (33) curviligne fixe s'étendant selon un contour fermé,
la came (33) curviligne étant configurée de manière telle que, lors de la rotation de l'embase (21), la pince (30) de préhension montée sur ladite extrémité libre du bras (26) principal suive, sur une plage angulaire (α) fixée de la rotation de l'embase (21), un parcours circulaire prédéterminé à convexité inversée par rapport à la trajectoire de l'embase (21) rotative,
**caractérisé en ce que** la pince (30) de préhension est montée à l'extrémité libre dudit bras (26) principal de manière à s'étendre approximativement transversalement à ce dernier et **en ce que**, lors de la rotation de l'embase (21), la pince (30) de préhension, montée à l'extrémité libre dudit bras (26) principal entraîné par le galet (32) suiveur coopérant avec la came (33), est déplacée en pivotement approximativement radialement.

2. Dispositif selon la revendication 1, **caractérisé en ce que** le bras (26) principal de l'équipage mobile (25) est conformé approximativement en L, avec une première branche (28) montée, par une de ses extrémités, sur ladite embase (21) rotative par l'intermédiaire dudit axe (27) de pivotement et avec une seconde branche (29) s'étendant approximativement transversalement à ladite première branche (28) et
**en ce que** ladite première branche (28) supporte, à son extrémité libre, ladite pince (30) de préhension qui s'étend sensiblement transversalement à ladite seconde branche (29).

3. Dispositif selon la revendication 2, **caractérisé en ce que** le galet (32) suiveur est solidaire de la seconde branche (29) du bras (26) principal.

4. Dispositif selon la revendication 3, **caractérisé en ce que** le galet (32) suiveur est supporté par un bras (31) de levier qui s'étend approximativement transversalement à la seconde branche (29) du bras (26) principal, à l'opposé de la première branche (28).

5. Dispositif selon la revendication 4, **caractérisé en ce que** la première branche (28) et la pince (30) de préhension s'étendent du même côté de la seconde branche (29) et le bras (31) de levier s'étend du côté opposé.

6. Dispositif selon l'une quelconque des revendications 2 à 5, **caractérisé en ce que** la première branche (28) et la seconde branche (29) du bras (26) principal forment entre elles un angle supérieur à 90° et compris entre 100° et 110°.

7. Dispositif selon l'une quelconque des revendications 2 à 6, **caractérisé en ce que** la pince (30) est orientée, par rapport à ladite seconde branche (29) du bras (26) principal, sous un angle supérieur à 90° et compris entre 95° et 110°.

8. Dispositif selon l'une quelconque des revendications 1 à 7, **caractérisé en ce que** l'embase (21) rotative comprend un plateau (22) et au moins un bras (24) de support solidaire dudit plateau (22) et s'étendant sensiblement radialement à celui-ci et **en ce que** l'extrémité de ce bras (24) de support supporte l'axe (27) de pivotement de l'équipage mobile (25).

9. Dispositif selon l'une quelconque des revendications 1 à 8, **caractérisé en ce que** la pince (30) est du type à rappel automatique par ressort (34) en position fermée.

10. Dispositif selon l'une quelconque des revendications 1 à 9, **caractérisé en ce qu'**il comporte deux galets (32a, 32b) suiveurs fous superposés propres à coopérer respectivement avec deux cames (33i, 33e), respectivement intérieure et extérieure, décalées verticalement l'une par rapport à l'autre.

## Claims

1. A rotary device for transferring containers, having a rotary base (21) which rotates continuously about an axis of rotation (23) and which supports at least one mobile assembly (25) comprising:
- a main arm (26) mounted pivotably on said base (21) by means of a pivot shaft (27), the pivot shaft (27) and the free end of the main arm (26) defining a line (L) which extends approximately tangentially to the circular trajectory of said pivot shaft, the pivot shaft preceding the free end of the arm in the direction of rotation (F) of the base (21),
- a gripping pincer (30) mounted on the free end of said main arm (26), and
- at least one freely rotating roller (32) connected solidly to said main arm (26) and capable of following, while interacting therewith, a fixed curvilinear cam (33) extending along a closed contour,
the curvilinear cam (33) being configured in such a way that, during the rotation of the base (21), the gripping pincer (30) mounted on said free end of the main arm (26) follows, over a fixed angular range (α) of the rotation of the base (21), a predetermined circular path having a convexity which is inversed with respect to the trajectory of the rotary base (21),
**characterized in that** the gripping pincer (30) is mounted at the free end of said main arm (26) in such a way that it extends approximately transversely to the latter, and **in that**, during the rotation of the base (21), the gripping pincer (30), mounted on the free end of said main arm (26) driven by the follower roller (32) which interacts with the cam (33), is moved by pivoting approximately radially.

2. The device as claimed in claim 1, **characterized in that** the main arm (26) of the mobile assembly (25) is approximately L-shaped, with a first branch (28) mounted, by one of its ends, on said rotary base (21) by means of said pivot shaft (27), and with a second branch (29) extending approximately transversely to said first branch (28), and
**in that** said first branch (28) supports, at its free end, said gripping pincer (30) which extends substantially transversely to said second branch (29).

3. The device as claimed in claim 2, **characterized in that** the follower roller (32) is connected solidly to the second branch (29) of the main arm (26).

4. The device as claimed in claim 3, **characterized in that** the follower roller (32) is supported by a lever arm (31) which extends approximately transversely to the second branch (29) of the main arm (26), opposite the first branch (28).

5. The device as claimed in claim 4, **characterized in that** the first branch (28) and the gripping pincer (30) extend on the same side of the second branch (29) and the lever arm (31) extends on the opposite side.

6. The device as claimed in any one of claims 2 to 5, **characterized in that** the first branch (28) and the second branch (29) of the main arm (26) form between them an angle of more than 90° and within the range from 100° to 110°.

7. The device as claimed in any one of claims 2 to 6, **characterized in that** the pincer (30) is oriented, with respect to said second branch (29) of the main arm (26), at an angle of more than 90° and within the range from 95° to 110°.

8. The device as claimed in any one of claims 1 to 7, **characterized in that** the rotary base (21) comprises a plate (22) and at least one support arm (24) connected solidly to said plate (22) and extending substantially radially thereto, and **in that** the end of this support arm (24) supports the pivot axis (27) of the mobile assembly (25).

9. The device as claimed in any one of claims 1 to 8, **characterized in that** the pincer (30) is of the type which is automatically returned by a spring (34) to the closed position.

10. The device as claimed in any one of claims 1 to 9, **characterized in that** it has two freely rotating follower rollers (32a, 32b), one above the other, for interaction respectively with two respective inner and outer cams (33i, 33e), which are offset vertically with respect to each other.

## Patentansprüche

1. Drehbare Vorrichtung zur Beförderung von Behältnissen, die ein drehbares Unterteil (21) aufweist, das sich kontinuierlich um eine Drehachse (23) dreht und auf dem mindestens eine bewegbare Einrichtung (25) sitzt, die umfasst:
- einen Hauptarm (26), der mittels einer Schwenkachse (27) schwenkbar auf diesem Unterteil (21) angebracht ist, wobei die Schwenkachse (27) und das freie Ende des Hauptarms (26) eine Linie (L) bilden, die sich annähernd tangential zu der kreisförmigen Bahn dieser Schwenkachse erstreckt, wobei die Schwenkachse dem freien Ende des Arms in der Drehrichtung (F) des Unterteils (21) vorausgeht,
- eine Greifzange (30), die an dem freien Ende dieses Hauptarms (26) angebracht ist, und
- mindestens eine frei drehbare Rolle (32), die mit dem Hauptarm (26) fest verbunden ist und geeignet ist, mit einem feststehenden, gebogenen Nocken (33), der sich auf einer geschlossenen Kontur erstreckt, zusammenzuwirken, indem sie ihm folgt,
wobei der gebogene Nocken (33) dergestalt konfiguriert ist, dass beim Drehen des Unterteils (21) die Greifzange (30), die an dem genannten freien Ende des Hauptarms (26) angebracht ist, über einen festen Winkelbereich (α) der Drehung des Unterteils (21) hinweg einer vorbestimmten kreisförmigen Bahn mit umgekehrter Konvexität, bezogen auf die Bahn des drehbaren Unterteils (21), folgt,
**dadurch gekennzeichnet, dass** die Greifzange (30) an dem freien Ende des genannten Hauptarms (26) dergestalt angebracht ist, dass sie sich annähernd quer zu diesem erstreckt, und dass beim Drehen des Unterteils (21) die Greifzange (30), die an dem freien Ende dieses Hauptarms (26) angebracht ist, welcher von der mit dem Nocken (33) zusammenwirkenden Nachlaufrolle (32) bewegt wird, in einer annähernd radial erfolgenden Schwenkbewegung verschoben wird.

2. Vorrichtung nach Anspruch 1,
**dadurch gekennzeichnet, dass** der Hauptarm (26) der bewegbaren Einrichtung (25) annähernd L-förmig ausgebildet ist, mit einem ersten Schenkel (28), der mit einem seiner Enden mittels der Schwenkachse (27) an dem genannten drehbaren Unterteil (21) angebracht ist, und mit einem zweiten Schenkel (29), der sich annähernd quer zu diesem ersten Schenkel (28) erstreckt, und dass dieser erste Schenkel (28) an seinem freien Ende diese Greifzange (30) hält, die sich im Wesentlichen quer zu diesem zweiten Schenkel (29) erstreckt.

3. Vorrichtung nach Anspruch 2,
**dadurch gekennzeichnet, dass** die Nachlaufrolle (32) mit dem zweiten Schenkel (29) des Hauptarms (26) fest verbunden ist.

4. Vorrichtung nach Anspruch 3,
**dadurch gekennzeichnet, dass** die Nachlaufrolle (32) von einem Hebelarm (31) gehalten wird, der sich annähernd quer zu dem zweiten Schenkel (29) des Hauptarms (26) erstreckt, und zwar von dem ersten Schenkel (28) abgewandt.

5. Vorrichtung nach Anspruch 4,
**dadurch gekennzeichnet, dass** der erste Schenkel (28) und die Greifzange (30) sich auf der gleichen Seite des zweiten Schenkels (29) erstrecken, und der Hebelarm (31) sich auf der anderen Seite erstreckt.

6. Vorrichtung nach einem der Ansprüche 2 bis 5,
**dadurch gekennzeichnet, dass** der erste Schenkel (28) und der zweite Schenkel (29) des Hauptarms (26) zwischen sich einen Winkel bilden, der größer ist als 90° und zwischen 100° und 110° beträgt.

7. Vorrichtung nach einem der Ansprüche 2 bis 6,
**dadurch gekennzeichnet, dass** die Greifzange (30) zu diesem zweiten Schenkel (29) des Hauptarms (26) in einem Winkel ausgerichtet ist, der größer ist als 90° und zwischen 95° und 110° beträgt.

8. Vorrichtung nach einem der Ansprüche 1 bis 7,
**dadurch gekennzeichnet, dass** das drehbare Unterteil (21) eine Platte (22) und mindestens einen mit dieser Platte (22) fest verbundenen Tragarm (24), der sich im Wesentlichen radial zu dieser erstreckt, umfasst, und dass das Ende dieses Tragarms (24) die Schwenkachse (27) der bewegbaren Einrichtung (25) stützt.

9. Vorrichtung nach einem der Ansprüche 1 bis 8,
**dadurch gekennzeichnet, dass** die Greifzange (30) eine Zange mit automatischer Rückstellung in Schließstellung mittels einer Feder (34) ist.

10. Vorrichtung nach einem der Ansprüche 1 bis 9,
**dadurch gekennzeichnet, dass** sie zwei übereinander angeordnete, lose Nachlaufrollen (32a, 32b) aufweist, die geeignet sind, mit zwei entsprechenden Nocken (33i, 33e) zusammenzuwirken, einem inneren bzw. einem äußeren, die vertikal versetzt zueinander angeordnet sind.
